# EUROPEAN PATENT SPECIFICATION

(11) **EP 3 374 315 B1**
(45) Date of publication and mention of the grant of the patent: **21.08.2019**
(21) Application number: 16806303.0
(22) Date of filing: 07.11.2016
(51) Int. Cl.: C01B 7/07, C12P 19/04, C13K 1/04, C13K 1/08, C13K 13/00

(54) **PROCESS FOR THE PRODUCTION OF A SACCHARIDE PRODUCT FROM AN AQUEOUS SOLUTION**
VERFAHREN ZUR HERSTELLUNG EINES SACCHARIDPRODUKTS AUS EINER WÄSSRIGEN LÖSUNG
PROCÉDÉ DE PRODUCTION D'UN PRODUIT DE TYPE SACCHARIDE À PARTIR D'UNE SOLUTION AQUEUSE

(30) Priority: 09.11.2015 NL 2015746
(43) Date of publication of application: 19.09.2018
(73) Proprietor: Avantium Knowledge Centre B.V., 1014 BV Amsterdam (NL)
(72) Inventor: MCKAY, Benjamin, 1014 BV Amsterdam (NL); HAGEBOLS, Erik Antonius Maria, 1014 BV Amsterdam (NL); ZHAO, Wei, 4811 XD Breda (NL)
(74) Representative: Rovers, Arnoldina M. A.
(86) International application number: PCT/NL2016/050774
(87) International publication number: WO 2017/082723

(56) References cited:
- DE-C- 362 230
- US-A- 4 645 658
- US-A1- 2013 168 226

## Description

The present invention relates to a process for the production of a saccharide product from an aqueous solution. In particular it relates to a process for the recovery of saccharides from a hydrolyzate of biomass, for example from the hydrolyzate of wood.

It has been known for many years how to hydrolyze and dissolve organic matter from lignocellulosic material, such as wood. A number of methods have been described for the hydrolysis of lignocellulosic biomass. One method involves enzymatic hydrolysis. This requires pre-treatment, such as steam explosion, i.e. a method wherein biomass particles are exposed to high pressure superheated steam before a brusque pressure drop, to make the cellulose and hemicellulose accessible for enzymatic hydrolysis (cf. US 2012/0104313 and US 2013/0078677). A second method employs hot compressed or even supercritical water. This method requires temperatures of e.g. 200 to 400 °C and high pressures, such as 50 to 250 bar at short contact times (cf. US 2013/239954). Alternatively, ionic liquids or acid ion exchange resins may be used (cf. US 2014/004563 and US 2014/060522, respectively).

Further, there are generally two methods to achieve hydrolysis and dissolution of the carbohydrate substances in lignocellulosic biomass, such as wood, wherein acids are used; the use of dilute acids at high temperature or the use of concentrated acid at low temperature. When dilute acids are used, high temperatures, e.g. >150 °C, are required. The process is typically conducted in aqueous systems and at high pressures (cf. the Scholler or Madison processes as described in US 5879463 and DE 640775).

In the Bergius-Rheinau process, as described in F. Bergius, Current Science, 1937, 632-637, wood is shredded to chips which are treated with concentrated hydrochloric acid. During the treatment about two-thirds of the wood is dissolved by the acid in the form of mono- and oligosaccharides, and about one third remains as lignin. The saccharides are separated from the hydrochloric acid solution in the next phase. The separation is achieved by evaporation in a tubular evaporator under vacuum at a temperature of about 36 °C. After evaporation the resulting syrup that contains 55 to 65 %wt of saccharides is spray dried. The resulting solid product contains 1 to 2 %wt of hydrochloric acid, some 8 %wt of water and about 90 %wt of saccharides. Hence, the solid was not very pure. Moreover, as indicated in US 2944923, the evaporation to remove the water requires a large heat supply.

In order to overcome these drawbacks, it is proposed in US 2944923 to pass the saccharides solution from the hydrolysis of wood in a single passage at atmospheric pressure upwardly through externally heated evaporator tubes in which the saccharides solution partially evaporates. During the evaporation especially the hydrochloric acid is removed. The temperature in the evaporator tubes is about 140 to 150 °C. The product of such a process is a more concentrated saccharides solution. From the examples it appeared that the solution still contained about 7 % of all hydrochloric acid that was introduced into the evaporator. Further, although it is mentioned in US 2944923 that the process incurs hardly any saccharide loss, it is well known that at such temperatures carbohydrates decompose, especially in an acidic aqueous environment.

A different way of removing the volatile hydrochloric acid from a wood hydrolysate is described in DE 362230. According to the process of DE 362230 a hot liquid heat carrier that is immiscible with the aqueous hydrolysate is mixed with the aqueous hydrolysate. Examples of heat carriers are shale oil, refined petroleum and refined paraffin oil. Since the heat carrier has been heated the temperature of the resulting mixture is increased and hydrochloric acid and water are vaporized. However, it has also been stated in DE 362230 that for the hourly treatment of 100 liters of aqueous hydrolysate 10,000 liters of recycled heat carrier is required. The inventory of heat carrier in this process is therefore huge. It is therefore proposed in DE 362230 that in order to render the heat carrier after separation from the hydrolysate suitable for recycling, it has to be treated over calcium chloride in order to remove any absorbed water. Moreover, the aqueous saccharide solution produced in this known process is to be purified to recover the saccharides.

Solid saccharides are produced in the process according to US 2013/0168226. In this process a container is filled with a hot heat carrier which is immiscible with an aqueous hydrolysate of biomass. Hydrolysate, comprising water, hydrochloric acid and saccharides, is sprayed into the hot heat carrier, so that evaporation of water and hydrochloric acid takes place. Since the hydrolysate has to be sprayed just under the surface of the heat carrier, a nozzle manifold is required to ensure a good distribution of hydrolysate over the cross-sectional area of the container. Saccharides precipitate in the form of solid particles and these particles are recovered from the hot carrier. This runs the risk that the bottom is contaminated with scale which complicates the recovery of the saccharides precipitate. Although this process yields solid saccharides, it is evident that the temperature of the heat carrier cannot be very high in order to avoid decomposition of saccharides. Therefore, the amount of heat carrier must be very high in order to provide sufficient energy for the evaporation of hydrochloric acid and water. The process according to US 2013/0168226 suffers the same drawback as the process according to DE 362230, viz. in that it requires a large amount of heat carrier to cause sufficient evaporation of hydrochloric acid and water.

It is apparent that all processes provide a hydrolyzate comprising saccharides and water; in some methods also acid is included in the hydrolyzate. However, in none of the prior art documents reference is made to by-products that are formed in the hydrolysis.

In pending Netherlands application No. 2014007 it is described that an excellent removal of hydrochloric acid and water can be achieved with the use of a reasonable amount of a liquid carrier if an evaporation step is applied to a mixture of the liquid carrier and aqueous saccharide-containing solution wherein the heat for the evaporation is supplied by a heated surface area. The process according to this Netherlands application No. 2014007 yields a water-containing vapor fraction and a mixture of solids saccharides and liquid carrier.

Although this process provides an attractive alternative to the process according to US 2013/0168226, it is apparent that neither process provides a solution to by-products that are formed in the preparation of saccharides from renewable sources, such as from a hydrolysate of biomass, for example from the hydrolysate of wood. It has now been found that such by-products can be elegantly removed from the saccharides by subjecting the liquid carrier to a liquid-liquid extraction step with a solvent wherein at least part of the by-products is soluble. Accordingly, the present invention provides a process for the production of saccharides from an aqueous solution, which solution comprises saccharides and by-products, which process comprises:
- in a mixing zone admixing the aqueous solution with a carrier liquid in which the saccharides are insoluble and that has a boiling point higher than that of water to obtain an aqueous admixture;
- removing water from the aqueous admixture to obtain a first carrier liquid phase comprising carrier liquid, by-products and saccharides;
- separating the saccharides from the first carrier liquid phase to obtain a crude carrier liquid, comprising by-products and carrier liquid, and a saccharide product,
wherein the process further comprises:
- subjecting at least a portion of the crude carrier liquid to a liquid-liquid extraction with a first solvent to obtain a by-product-rich solvent phase and a by-product-lean carrier liquid phase; and
- recycling at least a portion of the by-product-lean carrier liquid phase to the mixing zone.

The present invention has the advantage that the by-product-lean carrier liquid phase is of a sufficiently high purity that it can at least partly be recycled to the mixing zone. The process also has an advantage over the process described in pending Netherlands application No. 2014007 in that the separation between carrier liquid and the combination of water and acid may be carried out in any manner; although evaporation is a suitable method, an evaporation step is not obligatory. A further advantage of the present process resides in that the process results in a by-product-rich solvent phase. If desired, the by-products may be isolated from this solvent phase, thereby increasing the yield of valuable products from the renewable source, such as wood.

The process according to the present invention may be applied to a variety of aqueous solutions. It is most advantageous when the aqueous solution is a hydrolyzate of lignocellulosic biomass, in particular a hydrolyzate of wood, torrefied wood, corn stover, wheat straw, rice straw, grass, empty fruit bunches, waste paper and combinations thereof. Wood is the preferred feedstock. The wood may originate from all types of trees, including spruce, willow, oak, birch, poplar, eucalyptus and other trees. The lignocellulosic biomass may be subjected to torrefaction in a variety of forms, including chips, pellets, powder, crushed particles, milled particles or ground particles. As indicated above such a hydrolysate may be obtained in the so-called Bergius Rheinau process, wherein the hydrolysis of wood is carried out with concentrated hydrochloric acid. Alternatives of this process employ other strong acids such as concentrated sulfuric acid. In the known Scholler or Madison process dilute sulfuric acid solutions are used for the hydrolysis of wood (cf. DE 640775 and DE 1567335). The latter process also yields an aqueous solution that may be used in the process according to the present invention. Aqueous solutions that can be used as starting material in the present process may also be obtained in hydrolysis processes of wood wherein no acid is used. As indicated above, hydrolysis processes wherein only water was used for the hydrolysis of biomass at high temperature and pressure have been described in e.g. US 2013/0239954, and also in EP 2622127. Also such aqueous solutions can be used in the process according to the present invention. However, typically, the aqueous solution comprises an acid, e.g. such as the acid used in the Berghius Rheinau or Scholler processes. The acid is thus preferably selected from the group consisting of hydrochloric acid, hydrobromic acid, sulfuric acid, nitric acid, formic acid, acetic acid and combinations thereof, in particular hydrochloric acid. In the specification further reference will be made to aqueous solutions that also comprise an acid. However, it will be understood that the process is also suitable for aqueous solutions that do not contain an acid.

The aqueous solution may comprise one or more saccharides. By a saccharide is understood a carbohydrate. Such carbohydrates are suitably divided into four categories; monosaccharides, disaccharides, oligosaccharides and polysaccharides. The aqueous solution that may be used in the present invention preferably comprise mono-, di- and/or oligosaccharides. These chemicals have lower molecular weights than polysaccharides. They tend to be soluble in water or aqueous acid solutions. That makes them very suitable for use in the present invention. The saccharides are suitably derived from the hydrolysis of biomass. Thus, the aqueous solution preferably comprises at least one selected from the group consisting of glucose, fructose, mannose, galactose, arabinose, xylose, sucrose, cellobiose, glucose dimers, glucose trimers, maltose, cellotriose, maltotriose, cellodextrins, dextrins, xylan-oligosaccharides, mannan-oligosaccharides, arabinan-oligosaccharides, oligofructans, starch, cellulose and combinations thereof. Typically the aqueous solution comprises at least one selected from the group consisting of mannose, glucose, galactose, arabinose, xylose and combinations thereof.

It has been known that the hydrolysis of wood results in the production of saccharides, including monosaccharides, in combination with the formation of by-products. Such by-products may comprise furfural and carboxylic acids with 1 to 7 carbon atoms. Suitable by-products include e.g. formic acid, acetic acid, and hydroxyl-group-containing acids such as gallic acid. Acids, such as formic acid and acetic acid can be recycled to the hydrolysis of the biomass, wherein it is active as hydrolyzing agent, together with other acids, such as hydrochloric or sulfuric acid. Typically by-products may also comprise organic compounds with more carbon atoms, e.g. from 10 to 25 carbon atoms. Suitable by-products include hydrocarbons, alcohols, aldehydes, ketones, carboxylic acids and carboxylic acid esters, having from 10 to 25 carbon atoms. The hydrocarbons consist of hydrogen and carbon. Certain by-products comprise oxygen in addition to carbon and hydrogen. Therefore the by-products suitably comprise oxygenated organic compounds having 10 to 25 carbon atoms. The compounds may be saturated or unsaturated. When unsaturated, the acid may have one or more unsaturated bonds. Aromatic acids are also feasible. When the by-product is a hydrocarbon, the compound may be a monoterpene, a sesquiterpene or a diterpene. The by-product may e.g. be the monoterpene limonene, or the sesquiterpene farnasene or the diterpene taxadiene. Such terpenoid compounds may also comprise one or more hydroxyl groups, such as taxifolin or betulin. Other hydroxyl group-containing compounds include pinosylvin, pimarol, sitosterol. Other oxygenated compounds may be alcohols, e.g. eicosanol or pimarol, and aldehydes, such as pimaral. Generally, the by-products include carboxylic acids with relatively long carbon chains, e.g. with 10 to 25 carbon atoms, such as stearic acid, linoleic acid, oleic acid, pinolenic acid, and the diterpenoic acids such as abietic acid. Esters of any of these acids may also be included in the by-products. Examples of suitable esters are the triglyceride esters of stearic, oleic, linoleic and pinolenic acid. Not only glycerol esters may be present. Also alkyl esters, such as methyl, ethyl, propyl or butyl esters of such acids may occur in the by-products. When wood is hydrolyzed a variety of by-products may be obtained in addition to the saccharides. Since it is generally desired to obtain the saccharides in a pure form, it is desirable to separate the by-products from the saccharides. From the above description of the potential by-products it is clear that the by-products may comprise valuable chemical compounds. It may be desirable to recover these by-products from the aqueous solution.

As indicated above, the aqueous solution preferably comprises an acid. The acid concentration may vary significantly, depending on the process in which the aqueous solution has been produced. When the aqueous solution has been produced in a process for the hydrolysis of biomass using a dilute acid, the acid concentration may be low, e.g. in the range of 0.5 to 4%wt acid. In such cases the acid is typically sulfuric acid. Preferably, the aqueous solution has been produced in a process for the hydrolysis of biomass wherein a concentrated acid is used. The acid is then suitably sulfuric acid or hydrochloric acid, most preferably hydrochloric acid, optionally in combination with an organic acid, such as acetic acid. In such a case the acid concentration in the aqueous solution may be as high as 45%wt, based on the weight of the aqueous solution. Therefore, the aqueous solution may suitably comprise 0.5 to 45 %wt of acid, preferably from 5 to 35%wt of acid, based on the aqueous solution.

The hydrolysis of biomass that is done by an aqueous medium, results in the dissolution of saccharides into the aqueous medium, yielding the aqueous solution. It is desirably that the saccharides concentration in the aqueous solution is as high as possible. Suitably, the concentration of saccharides is at least 5 %wt, based on the aqueous solution. The concentration may exceed 25 %wt, e.g. be up to 35 or 40 %wt. Therefore, the aqueous solution preferably comprises from 5 to 35 %wt of saccharides, based on the aqueous solution.

The level of by-products may be dependent on a number of factors, including the biomass from which the aqueous solution is obtained, and also the conditions under which the aqueous solution has been obtained. Typically, the concentration of by-products may vary, e.g. in the range of 0.1 to 10%wt. This concentration range is especially advantageous when the by-products consist of organic compounds having 10 to 25 carbon atoms.

The carrier liquid has a boiling point above that of water. In order to facilitate the separation of the carrier liquid from the water and, optionally, from the acid, by evaporation the carrier liquid preferably has an atmospheric boiling point that is at least 60 °C, more preferably 75 °C, above that of water. Hence the carrier liquid preferably has an atmospheric boiling point of at least 175 °C. In order to facilitate the separation even further the atmospheric boiling point of the carrier liquid is suitably at least 200, more preferably at least 240 °C. The upper limit of the boiling point range for the carrier liquid is not critical as long as the carrier liquid is in the liquid phase when it is admixed with the aqueous solution and when it is recovered as first carrier liquid phase comprising carrier, by-products and saccharides.

The carrier liquid is selected from the liquids in which saccharides are insoluble. In this specification by 'insoluble' is understood that a substance in question dissolves for less than 1 g/100 mL at 25 °C. The carrier liquid may be miscible with water, as long as saccharides are insoluble therein. When a carrier liquid is immiscible with water, saccharides tend to be insoluble in such a carrier liquid. Hence, the carrier liquid is preferably immiscible with water. In this specification by 'immiscible' is understood that when a volume of water and a volume of the carrier liquid are added to form a mixture the volumes of the liquid layers that emerge deviate less than 5% vol/vol from the volumes that were originally added to form the mixture at 25 °C.

A possible carrier liquid is formed by the polymers and oligomers of alkylene glycol. The miscibility of such polymers with an aqueous solution depends on the chain length, both as to the number of alkylene oxide monomers and the number of carbon atoms in the alkylene oxide monomer itself. Already the dimer of ethylene glycol, having a boiling point of about 245 °C is a possible carrier liquid. Hence, when the polyalkylene oxide is a polymer of ethylene oxide, the number of ethylene oxide units may suitably be as low as two. The higher polymers are usually characterized by their average molecular weight. Polyethylene oxides are prepared with very high molecular weights, e.g. up to 10,000,000. However, typically the upper limit of the molecular weight of the polyethylene oxide that may be used in the present process is generally about 25,000. In addition to polyethylene glycol polymers of other alkylene oxides may be used, in particular polymers of alkylene oxides having 2 to 6 carbon atoms, such as polypropylene glycol, polybutylene glycol and mixtures thereof.

Other, more suitable carrier liquids have been proposed in the prior art. Such carrier liquids are advantageously hydrocarbonaceous oils. Examples of such oils are shale oil, refined petroleum oils, and refined paraffin oils, as already disclosed in DE 362230. Also suitable oils are polyisobutylene, poly-alpha-olefins, other branched polyolefins and other petroleum liquids with a sufficiently high boiling point. The oils may also be characterized by their viscosity. Suitable oils have a kinematic viscosity in the range of 1 to 200 cSt (mm²/s) at 100 °C, determined in accordance with ASTM D 445. The number of carbon atoms in the molecules of such carrier oils is suitably at least 10. Suitable hydrocarbons have at least 8 carbon atoms. Decane already has a boiling point of about 175 °C. The number of carbon atoms may be as high as 50. Suitable oils include hydrocarbons with 20 to 40 carbon atoms, e.g. from 25 to 35 carbon atoms. The hydrocarbonaceous oils may be saturated. Alternatively, the hydrocarbonaceous oils contain one or more unsaturated bonds. Hence, it is feasible to use oils comprising triacontane or triacontene, which are merely mentioned as examples of suitable hydrocarbonaceous oils. The hydrocarbonaceous oil is preferably selected from paraffinic oils, poly-alpha-olefins and combinations thereof.

The aqueous admixture is subsequently subjected to a separation step in which water and acid are removed therefrom. Especially when the carrier liquid is immiscible with water a skilled person might want to subject the aqueous admixture to a liquid-liquid extraction. However, that does not seem to be very suitable. Since the saccharides have an affinity to water and most thereof are soluble in water a liquid-liquid extraction would merely result in an aqueous phase containing the acid, saccharides, water and to by-products. Therefore acid and water are preferably removed in a different way. Such a way may be the same or similar to the method described in US 8283178, by spraying a mixture of the aqueous solution and a heated carrier liquid to obtain a homogeneous admixture and a substantially complete evaporation of water and acid. Saccharides, by-products and carrier liquid remain non-vaporous and are collected as a first carrier liquid phase comprising saccharides, carrier liquid and by-products. The saccharides and by-products may be in a liquid phase or be present in the form of solids. Alternatively, the method according to the above-described application US 2013/0168226 can be used. Suitably, water and acid are removed from the aqueous admixture by means of evaporation in an evaporation step. The evaporation step suitably employs an evaporator wherein the heat for evaporation is provided by a heated surface. The heated surface may be kept at the desired temperature by a heat exchange medium. An indirect heat exchanger-type evaporator is thus considered suitable. The heat exchange medium can be selected from a variety of known mediums. However, it is most feasible to use steam as heat exchange medium. Steam tends to be amply available. The skilled person will realize that by selecting high-pressure steam or low-pressure steam the desired temperature in the evaporator can be easily implemented. In view thereof, the evaporation step is suitably conducted in one or more of the equipment selected from a stirrer evaporator, rising film evaporator, forced circulation evaporator, natural circulation evaporator, falling film evaporator, rising film evaporator, rising-falling film evaporator, thin film evaporator (also known as a wiped film evaporator), short path distillation evaporator, falling film short path evaporator, fluidized bed evaporator, falling film counterflow trickle evaporator, spiral tube evaporator or forced circulation evaporator. It is advantageous when the evaporation is carried out in two or more evaporators that are arranged in series. These evaporators do not need to be the same. Preferably, they are different. Hence, it is advantageous to arrange for a configuration wherein the evaporation step is conducted first in a falling film evaporator followed by a forced recirculation evaporator.

The conditions under which the evaporator works are preferably selected such that not only the desired amounts of water and acid evaporate, but also that degradation of the saccharides substantially does not occur. Therefore, the evaporation step is suitably carried out at a temperature in the range of 50 to 120 °C more preferably from 70 to 95 °C. To ensure that the evaporation of water and acid takes place smoothly, the pressure in the evaporation step is suitably a reduced pressure. Accordingly, the evaporation step is preferably carried out at a pressure below 400 mbar (i.e., corresponding to 40 kiloPascal (kPa)), more preferably ranging from 50 to 300 mbar (i.e. corresponding to 5 to 30 kPa).

The removal of water and acid, e.g. by evaporation, results in a first carrier liquid phase comprising carrier liquid, saccharides and by-products. When water has substantially completely been removed the saccharides tend to be solid. However, the person skilled in the art may prefer to evaporate only part of the water. In such a case a viscous, potentially supersaturated solution of saccharides in water may exist in addition to the liquid carrier liquid. Such a solution may be preferred by the skilled person when the by-products are more soluble in the carrier liquid than in water. The proportion of water removed is typically from 70 to 100 %, based on the amount of water in the aqueous admixture.

Dependent on the proportion of water that has been removed from the aqueous admixture the skilled person has a number of techniques at his disposal to separate saccharides from the first carrier liquid phase. Suitably, saccharides are separated from the first carrier liquid phase comprising carrier liquid, by-products and saccharides, by means of settling, centrifugation, filtration, hydrocyclone separation and combinations thereof, yielding the saccharide product.

Alternatively, the saccharide product may be recovered in a different way. That is especially the case when the by-products show an affinity with the carrier liquid. In such a case the first carrier liquid phase comprising carrier liquid, saccharides and by-products is suitably mixed with a second solvent that is immiscible with the carrier liquid and in which saccharides are soluble to yield two liquid phases, and wherein the two liquid phases are separated to yield a second solution comprising saccharides dissolved in the second solvent as one phase, and the crude carrier liquid as a second phase. The crude carrier liquid is a saccharides-lean carrier liquid phase that is separated from the two liquid phases. Saccharides tend to be soluble in water. Therefore, the carrier liquid in this embodiment is suitably immiscible with water and the second solvent is water. The saccharide product thus obtained is a solution of saccharides. The solution makes can be made as dilute as feasible, which may facilitate transport and other handling activities.

In accordance with the present invention at least a portion of the crude carrier liquid is subjected to a liquid-liquid extraction with a first solvent. The liquid-liquid extraction serves to remove by-products from the process. It is typically not necessary to subject the complete crude carrier liquid to the liquid-liquid extraction. Although the removal of by-products would be optimal by subjecting the entire crude carrier liquid to the liquid-liquid extraction, it would involve expensive equipment due to its size. It is typically sufficient to subject only a portion of the crude carrier liquid to the liquid-liquid extraction. The portion may be in the range of 0.5 to 100%, preferably from 1 to 50%, more preferably from 2 to 10%, all percentages based on the amount of the crude carrier liquid that is obtained when saccharides are separated from the first carrier liquid phase. The portion of the crude carrier liquid that is not subjected to the liquid-liquid extraction is preferably in its entirety or partially recycled to the mixing zone. Since the carrier liquid does not form part of the products, it is preferred to recycle the entire portion to the mixing zone. The skilled person will realize that undesirable and/or unavoidable losses in the process may result in the loss of small portion of carrier liquid, e.g. due to absorption in the saccharide product.

In the liquid-liquid extraction a first solvent is employed. The first solvent is suitably immiscible with the carrier liquid. On the other hand it should also be able to extract by-products from the crude carrier liquid. These by-products have been taken-up in the carrier liquid and may show an affinity with the carrier liquid and even be soluble in the carrier liquid. The skilled person therefore should carefully select the first solvent to optimize the extraction of by-products from the carrier liquid to the first solvent. It has been found that the first solvent is suitably an oxygen-containing organic compound. The oxygen-containing organic compound may be selected from an alcohol, an ether, an aldehyde, a ketone, an ester of a carboxylic acid, a carboxylic acid and combinations thereof. The organic compound preferably has 1 to 4 carbon atoms. Since many of the above-mentioned by-products also comprise an oxygen atom, and are thus somewhat polar, the organic compounds that are used as first solvent are also suitably somewhat polar. Ethers such as tetrahydrofuran (THF) may be used. However, it is preferred to use an alcohol, an aldehyde, a ketone or a combination thereof as first solvent. Suitable chemical compounds include methanol, ethanol, propanol, isopropanol and the various isomers of butanol. Suitable aldehydes include acetaldehyde and propaldehyde, whereas suitable ketones include acetone, methyl ethyl ketone and methyl propyl ketone. Combinations of such chemical compounds may be used, as indicated earlier.

In the liquid-liquid extraction two liquid phases are obtained; a by-product-rich solvent phase and a by-product-lean carrier liquid phase. Since the by-product-lean carrier liquid phase has a reduced content of by-products, at least a portion thereof is recycled to the mixing zone and is re-used. The recycling may be achieved by subjecting the entire crude carrier liquid to the liquid-liquid extraction with a first solvent and recycling the by-product-lean carrier liquid phase thus produced to the mixing zone. Alternatively, a portion of the crude carrier liquid is recycled directly, i.e. without further purification, to the mixing zone and only another portion of the crude carrier liquid is subjected to the liquid-liquid extraction. This method has the advantage that a smaller amount of carrier liquid is to be purified and thus that the process is less expensive and the operation is simpler. When only a portion of the crude carrier liquid is subjected to the liquid-liquid extraction, such a portion is suitably in the range of 0.5 to 25%wt, preferably from 1 to 10 %wt, based on the crude carrier liquid separated from the first carrier liquid phase. Preferably, as much as possible of the crude carrier liquid is recycled to the mixing zone, most preferably 100%, optionally after purification via the liquid-liquid extraction. However, in order to prevent the build-up of by-products that are soluble in the carrier liquid, it may be desirable to discharge a portion of the contaminated carrier liquid before it is subjected to the liquid-liquid extraction. Such a portion is preferably small, e.g. from 0 to 10%wt, based on the portion of the contaminated liquid that is subjected to the liquid-liquid extraction. The portion that is discharged may typically be in the range of 1 to 7 %wt, based on the portion of the crude liquid that is subjected to the liquid-liquid extraction.

The liquid-liquid extraction may be carried out in a variety of extraction apparatuses. The skilled person would have a multitude of designs at his disposal. These designs include extraction columns, mixer settlers and centrifugal extractors. The extraction may be carried out with or without agitation. The extraction columns may comprise packings, but also perforated plates to facilitate the contact between the liquid phases. The nature of the extraction equipment is not critical. The skilled person may select the desired design.

The liquid-liquid extraction results in a by-product-rich solvent phase and a by-product-lean carrier liquid phase. As described above, the by-product-lean carrier liquid phase is suitably recycled to the mixing zone. The by-product-rich solvent phase comprises a significant portion of the by-products that were present in the crude carrier liquid. The by-products may be present in a rather dilute form. For recovery purposes or for discharge reasons it may be desirable to concentrate the by-products so that a concentrated stream comprising by-products in the first solvent is obtained. In order to achieve this, the by-product-rich solvent phase is preferably subjected to evaporation to yield a purified solvent vapor and a by-product-laden residue. It was found to be advantageous when the first solvent is a chemical compound with up to 4 carbon atoms. Such compounds have a relatively low boiling point, so that the evaporation thereof can be conducted in an economically effective way. The purified solvent vapor is suitably condensed and the condensate thus obtained is preferably recycled to the liquid-liquid extraction.

The by-product-laden residue comprises a relatively small amount of first solvent and most, if not all, of the by-products. Dependent on the economics of any purification and also on the nature of the by-products, the skilled person may opt for the discharge of the by-product-laden residue or for the recovery of by-products therefrom.

It is observed that the process for the hydrolysis of biomass, in which the process according to the present invention can be carried out, may be conducted in a variety of ways, without affecting the utility of the present process. For instance, the process of the present invention can be applied in a process wherein biomass is first pre-hydrolyzed to yield a pre-hydrolyzate and pre-hydrolyzed biomass, and wherein the pre-hydrolyzed biomass is subsequently further hydrolyzed yielding a final hydrolyzate. Such may e.g. be desirable in the hydrolysis of wood. In the pre-hydrolysis hemicelluloses is predominantly hydrolyzed, yielding a mixture of C₅ and C₆ saccharides in the pre-hydrolyzate. The pre-hydrolyzed biomass then comprises mainly cellulose so that the hydrolysis thereof yields mainly C₆ saccharides. The process of the present invention may be applied to either one of the pre-hydrolyzate or the final hydrolyzate or to both.

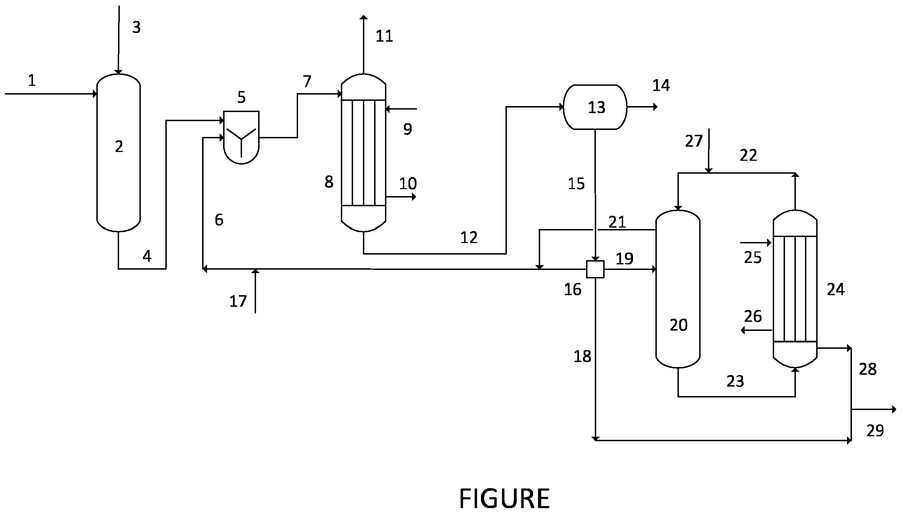

The invention will be further illustrated by means of the accompanying figure showing a simplified flow scheme for a process wherein the present process can be applied.

Referring to the figure a biomass material such as woodchips or wood pellets is fed via a line 1 into a hydrolysis reactor 2. When the hydrolysis reactor 2 has been filled a stream of concentrated hydrochloric acid in water, supplied by a line 3, is passed along the biomass material. The concentrated hydrochloric acid typically has a concentration of hydrochloric acid in the range of 35 to 45 %wt, based on the stream. In addition to hydrochloric acid and water, the stream may comprise one or more other components, e.g. C₁-C₄ carboxylic acids, such as formic acid and/or acetic acid. In the Figure only one reactor has been shown. The skilled person will realize that the reaction section in the process described may comprise one or more reactors, e.g. up to 10 reactors, that are arranged in series. In addition, one or more spare reactors may be provided which allow for an operation in a swing method. The hydrochloric acid-containing stream achieves hydrolysis of the carbohydrate polymeric material that is present in the biomass yielding as hydrolyzate an aqueous solution of saccharides, by-products and hydrochloric acid. The hydrolyzate is withdrawn from the reactor 2 via a line 4. In the Figure only one hydrolyzate stream has been shown. It will be realized that the in some operations it may be advantageous to conduct the hydrolysis such that first a pre-hydrolyzate is obtained and subsequently a final hydrolyzate. The composition of the saccharides in the pre-hydrolyzate and the final hydrolyzate will be different, which may facilitate the recovery of certain saccharides.

The hydrolyzate is passed to a mixing vessel 5 wherein it is mixed with a stream of carrier liquid, supplied via a line 6. The aqueous admixture obtained is withdrawn from the mixing vessel 5 via a line 7 to an evaporation column 8. The evaporation column is provided with heat exchange surfaces (not shown) which are heated by the introduction of a heat exchange medium, such as steam, via a line 9 and the cooled heat exchange medium is withdrawn via a line 10. In the evaporation column 8 a vapor of hydrochloric acid, water and optionally low-boiling carboxylic acids, is obtained via a line 11. The vapor may be condensed and recycled to the hydrolysis reactor 2. Preferably, the vapor will be subjected to re-concentration to improve the hydrolysis (not shown). Although in the Figure an evaporation column has been shown as separation vessel it is evident that different methods to separate the carrier liquid with the saccharides and by-products on the one hand and the water and acid on the other hand are available, and can be used in the present process.

A first carrier liquid phase, comprising carrier liquid, saccharides and by-products, is obtained in the evaporation column 8 and is recovered via a line 12. The first carrier liquid phase is passed to a separation vessel 13. The vessel 13 may be a settling vessel or any other separator that is suitable to separate the saccharides obtained from the carrier liquid. A saccharide product is obtained from the separation vessel 13 and recovered via a line 14. A stream of crude carrier liquid comprising the carrier liquid and by-products is withdrawn from the separation vessel 13 via a line 15. The crude carrier liquid is passed to a splitter 16, wherein the crude liquid is divided into a recycle stream, withdrawn via the line 6, a waste stream, withdrawn via a line 18, and a third stream withdrawn via a line 19. The recycle stream in the line 6 is recycled to the mixing vessel 5.

The third stream of crude carrier liquid in the line 19 is passed to a liquid-liquid extraction column 20. In the column 20 the stream of crude carrier liquid is contacted with a stream of first solvent, such as methanol, ethanol, acetone or mixtures of alcohols and ketones. The first solvent is passed into the extraction column by a line 22. By-products dissolve in the first solvent to from a by-product-rich solvent phase and a by-product-lean carrier liquid phase. The by-product-lean carrier liquid phase is withdrawn from the extraction column 20 via a line 21. It is combined with line 6 to provide for a stream of carrier liquid to be recycled to the mixing vessel 5. To supplement the amount of carrier liquid that is to be fed into the mixing vessel 5 an amount of make-up carrier liquid supplied via a line 17 is added to the liquid in the line 6. In the figure the make-up carrier liquid is added to the liquid in line 6. The skilled person will realize that any make-up carrier liquid may also be fed into the mixing vessel 5 separately from the recycle liquid in line 6.

By-product-rich solvent phase is withdrawn from the extraction vessel via a line 23. It is advantageous to separate the first solvent from the by-products in this by-product-rich solvent phase. Since the first solvent can be selected such that the evaporation thereof is simple and cost-effective, a suitable separation method is evaporation. Thereto, the by-product-rich solvent phase in the line 23 is fed into a second evaporation column 24. The first solvent is evaporated on the heating surfaces that are arranged in the column 24. These heating surfaces are heated by the introduction of a heated heat transfer medium, such as steam, via a line 25 and the withdrawal of cooled heat transfer medium via a line 26. The evaporation of the by-product-rich solvent phase results in a vapor of purified first solvent that is withdrawn from the column 24 via the line 22. The purified first solvent vapor is condensed to form a liquid again (not shown). Any first solvent that is required to make up for any losses is provided via a stream of make-up first solvent supplied via a line 27. In the figure the make-up first solvent is added to the liquid in line 22. The skilled person will realize that any make-up first solvent may also be fed into the column 24 separately from the condensed purified first solvent vapor in line 22.

From the column 24 also a by-product-laden residue, typically a liquid stream comprising by-products and, optionally, some carrier liquid, is obtained. This stream of by-product-laden residue is withdrawn from the evaporation column 24 via a line 28. If desired, the stream of the line 28 may be combined with the stream of the line 18 to a form a stream rich in by-products that is withdrawn via a line 29. The by-products may be isolated from this stream, if desired, or the stream, including the by-products, may be discharged or combusted.

The following example illustrates the suitability of the present invention.

### EXAMPLE

Six compounds were dissolved in two different carrier liquids. The six compounds were exemplary for the by-products that may be obtained when wood is subjected to hydrolysis by the reaction of concentrated hydrochloric acid and that may be obtained when the hydrolyzate thus obtained in treated with the carrier liquid. The compounds were
a) betulin, a triterpene having a pentacyclic structure and two hydroxyl groups,
b) abietic acid, i.e. a diterpene compound derived from four isoprene units and a having one carboxylic acid group,
c) linoleic acid, a fatty aid having 18 carbon atoms and two unsaturated bonds,
d) 1-eicosanol, a linear alkanol having 20 carbon atoms,
e) sitosterol, a phytosterol with a chemical structure similar to cholesterol, and
f) limonene, a cyclic terpene having two unsaturated bonds.

Carrier liquid 1 is a paraffin oil with a boiling range of 388 to 709 °C and a kinematic viscosity of 481 mm²/s at 40 °C and a kinematic viscosity of about 31 at 100 °C (ASTM D445). Carrier liquid 1 is immiscible with water.

Carrier liquid 2 is a poly-alpha-olefin having a kinematic viscosity of 1240 mm²/s at 40 °C and a kinematic viscosity of 100 mm²/s at 100 °C (ASTM D445). It has a flash point of 283 °C (ASTM D92). Carrier liquid 2 is immiscible with water.

The concentrations of the six compounds in Carrier liquids 1 and 2 are shown in Table 1.

**Table 1. Concentration of compounds in Carrier liquids (%wt, based on Carrier liquid).**

| Organic compound | Carrier liquid 1 | Carrier liquid 2 |
|---|---|---|
| betulin | 0.009 | 0.018 |
| abietic acid | 0.093 | 0.069 |
| linoleic acid | 0.107 | 0.080 |
| 1-eicosanol | 0.053 | 0.044 |
| sitosterol | 0.100 | 0.070 |
| limonene | 0.084 | 0.063 |

The experiments were carried out with three different organic solvents, viz. methanol, butanol and acetone.

In each experiment, 2 mL of an organic solvent was added to 3 mL of the carrier liquid solutions. The admixture obtained were shaken for 60 min at room temperature. The concentration of each compound in each of the carrier liquids was determined and the partition coefficient was calculated. By partition coefficient P is understood the ratio of concentrations of each of the compounds in an organic solvent and in a carrier liquid. The partition coefficient is expressed as
log P, being log {[compound]_{carrier liquid}/[compound]_{organic solvent}}.

The partition coefficients are shown in Table 2 for Carrier liquid 1 and in Table 3 for Carrier liquid 2. A negative coefficient indicates that the compound in question preferentially dissolves in the organic solvent.

**Table 2. Partition coefficient with Carrier liquid 1**

| Exp. No. | Solvent | Log P | | | | | |
|---|---|---|---|---|---|---|---|
| | | betulin | abietic acid | linoleic acid | 1-eicosanol | sitosterol | limonene |
| 1 | methanol | n/d | -0.30 | -0.45 | -0.41 | 0.35 | 0.24 |
| 2 | butanol | n/d | -0.19 | -0.26 | -0.79 | -0.45 | -0.23 |
| 3 | acetone | n/d | -0.26 | -0.44 | -0.28 | 0.16 | -0.21 |

| | | | | | | | |
|---|---|---|---|---|---|---|---|
| n/d: not determined | | | | | | | |

**Table 3. Partition coefficient with Carrier liquid 2**

| Exp. No. | Solvent | Log P | | | | | |
|---|---|---|---|---|---|---|---|
| | | betulin | abietic acid | linoleic acid | 1-eicosanol | sitosterol | limonene |
| 4 | methanol | -0.36 | -0.14 | -0.92 | -0.78 | -0.05 | 0.46 |
| 5 | butanol | -1.09 | -0.22 | -0.77 | -1.16 | -0.63 | 0.06 |
| 6 | acetone | -1.03 | -0.31 | -1.04 | -0.59 | -0.10 | 0.05 |

The experiments show that the organic compounds dissolve in each of the organic solvents. All three solvents are suitable for use in the present process. Dependent on the carrier liquid and by-product the skilled person may select the most desirable combination.

## Claims

1. Process for the production of saccharides from an aqueous solution, which solution comprises saccharides and by-products, which process comprises:
- in a mixing zone admixing the aqueous solution with a carrier liquid in which the saccharides are insoluble and that has a boiling point higher than that of water to obtain an aqueous admixture;
- removing water from the aqueous admixture to obtain a first carrier liquid phase comprising carrier liquid, by-products and saccharides;
- separating the saccharides from the first carrier liquid phase to obtain a crude carrier liquid, comprising by-products and carrier liquid, and a saccharide product,
wherein the process further comprises:
- subjecting at least a portion of the crude carrier liquid to a liquid-liquid extraction with a first solvent to obtain a by-product-rich solvent phase and a by-product-lean carrier liquid phase; and
- recycling at least a portion of the by-product-lean carrier liquid phase to the mixing zone.

2. Process according to claim 1, wherein the aqueous solution is a hydrolysate of biomass, preferably a hydrolysate of wood.

3. Process according to claim 1 or 2, wherein the aqueous solution contains an acid selected from the group consisting of hydrochloric acid, hydrobromic acid, sulfuric acid, nitric acid, formic acid, acetic acid and combinations thereof, the aqueous solution preferably containing hydrochloric acid.

4. Process according to any one of claims 1 to 3, wherein the aqueous solution comprises at least one selected from the group consisting of glucose, fructose, mannose, galactose, arabinose, xylose, sucrose, cellobiose, glucose dimers, glucose trimers, maltose, cellotriose, maltotriose, cellodextrins, dextrins, xylan-oligosaccharides, mannan-oligosaccharides, arabinan-oligosaccharides, oligofructans, starch, cellulose and combinations thereof.

5. Process according to anyone of claims 1 to 4, wherein the aqueous solution comprises from 5 to 35 %wt saccharides, 0.1 to 10%wt by-products and 5 to 45 %wt acid, all percentages based on the aqueous solution.

6. Process according to any one of claims 1 to 5, wherein the carrier liquid is immiscible with water.

7. Process according to any one of claims 1 to 6, wherein the carrier liquid has a boiling point of at least 175 °C.

8. Process according to any one of claims 1 to 7, wherein the carrier liquid is a hydrocarbonaceous oil comprising hydrocarbons with 8 to 50 carbon atoms.

9. Process according to any one of claims 1 to 8 wherein water and acid are removed from the aqueous admixture by evaporation in an evaporation step.

10. Process according to claim 9 , wherein the evaporation step is carried out at a temperature in the range of 50 to 120 °C.

11. Process according to any one of claims 9 to 10, wherein the evaporation step is carried out at a pressure below 400 mbar, preferably ranging from 50 to 300 mbar.

12. Process according to any one of claims 1 to 11, wherein saccharides are separated from the first carrier liquid phase comprising carrier liquid, by-products and saccharides, by means of settling, centrifugation, filtration, hydrocyclone separation and combinations thereof.

13. Process according to any one of claims 1 to 11, wherein the first carrier liquid phase comprising carrier liquid, by-products and saccharides is mixed with a second solvent that is immiscible with the carrier liquid and in which saccharides are soluble to yield two liquid phases, and wherein the two liquid phases are separated to yield a second solution comprising saccharides dissolved in the second solvent as one phase, and the crude carrier liquid as the second phase.

14. Process according to claim 13, wherein the carrier liquid is immiscible with water and the second solvent is water.

15. Process according to any one of claims 1 to 14, wherein the first solvent is an oxygen-containing organic compound.

## Patentansprüche

1. Verfahren zur Herstellung von Sacchariden aus einer wässrigen Lösung, die Saccharide und Nebenprodukte enthält, wobei das Verfahren Folgendes umfasst:
- Mischen der wässrigen Lösung mit einer Trägerflüssigkeit, in der die Saccharide unlöslich sind und die einen Siedepunkt hat, der über dem von Wasser liegt, in einer Mischzone zum Erhalt einer wässrigen Mischung;
- Entfernung von Wasser aus der wässrigen Mischung zum Erhalt einer ersten Trägerflüssigkeitsphase, die Trägerflüssigkeit, Nebenprodukte und Saccharide enthält;
- Abtrennen der Saccharide von der ersten Trägerflüssigkeitsphase zum Erhalt einer rohen Trägerflüssigkeit, die Nebenprodukte und Trägerflüssigkeit enthält, und eines Saccharid-Produkts,
wobei das Verfahren ferner Folgendes umfasst:
- Flüssig-Flüssig-Extraktion mindestens eines Teils der rohen Trägerflüssigkeit mit einem ersten Lösungsmittel zum Erhalt einer nebenproduktreichen Lösungsmittelphase und einer nebenproduktarmen Trägerflüssigkeitsphase; und
- Zurückführen mindestens eines Teils der nebenproduktarmen Trägerflüssigkeitsphase zur Mischzone.

2. Verfahren nach Anspruch 1, wobei es sich bei der wässrigen Lösung um ein Biomasse-Hydrolysat, vorzugsweise ein Holz-Hydrolysat, handelt.

3. Verfahren nach Anspruch 1 oder 2, wobei die wässrige Lösung eine Säure aus der Gruppe bestehend aus Salzsäure, Bromwasserstoffsäure, Schwefelsäure, Salpetersäure, Ameisensäure, Essigsäure und Kombinationen davon enthält, wobei die wässrige Lösung vorzugsweise Salzsäure enthält.

4. Verfahren nach einem der Ansprüche 1 bis 3, wobei die wässrige Lösung mindestens eines aus der Gruppe bestehend aus Glucose, Fructose, Mannose, Galactose, Arabinose, Xylose, Saccharose, Cellobiose, Glucose-Dimeren, Glucose-Trimeren, Maltose, Cellotriose, Maltotriose, Cellodextrinen, Dextrinen, Xylan-Oligosacchariden, Mannan-Oligosacchariden, Arabinan-Oligosacchariden, Oligofructanen, Stärke, Cellulose und Kombinationen davon enthält.

5. Verfahren nach einem der Ansprüche 1 bis 4, wobei die wässrige Lösung 5 bis 35 Gew.-% Saccharide, 0,1 bis 10 Gew.-% Nebenprodukte und 5 bis 45 Gew.-% Säure enthält, wobei sich alle Prozentangaben auf die wässrige Lösung beziehen.

6. Verfahren nach einem der Ansprüche 1 bis 5, wobei die Trägerflüssigkeit nicht mit Wasser mischbar ist.

7. Verfahren nach einem der Ansprüche 1 bis 6, wobei die Trägerflüssigkeit einen Siedepunkt von mindestens 175 °C aufweist.

8. Verfahren nach einem der Ansprüche 1 bis 7, wobei es sich bei der Trägerflüssigkeit um ein Kohlenwasserstofföl handelt, das Kohlenwasserstoffe mit 8 bis 50 Kohlenstoffatomen enthält.

9. Verfahren nach einem der Ansprüche 1 bis 8, wobei Wasser und Säure durch Verdampfung in einem Verdampfungsschritt aus der wässrigen Mischung entfernt werden.

10. Verfahren nach Anspruch 9, wobei der Verdampfungsschritt bei einer Temperatur im Bereich von 50 bis 120 °C durchgeführt wird.

11. Verfahren nach einem der Ansprüche 9 bis 10, wobei der Verdampfungsschritt bei einem Druck unter 400 mbar, vorzugsweise im Bereich von 50 bis 300 mbar, durchgeführt wird.

12. Verfahren nach einem der Ansprüche 1 bis 11, wobei Saccharide mittels Absetzen, Zentrifugation, Filtration, Hydrozyklon-Abtrennung und Kombinationen davon aus der ersten Trägerflüssigkeitsphase, die Trägerflüssigkeit, Nebenprodukte und Saccharide enthält, abgetrennt werden.

13. Verfahren nach einem der Ansprüche 1 bis 11, wobei die erste Trägerflüssigkeitsphase, die Trägerflüssigkeit, Nebenprodukte und Saccharide enthält, mit einem zweiten Lösungsmittel, das mit der Trägerflüssigkeit nicht mischbar ist und in dem Saccharide löslich sind, gemischt wird, was zwei Flüssigkeitsphasen ergibt, und wobei die zwei Flüssigkeitsphasen getrennt werden, was eine zweite Lösung, die in dem zweiten Lösungsmittel gelöste Saccharide enthält, als eine Phase und die rohe Trägerflüssigkeit als die zweite Phase ergibt.

14. Verfahren nach Anspruch 13, wobei die Trägerflüssigkeit nicht mit Wasser mischbar ist und es sich bei dem zweiten Lösungsmittel um Wasser handelt.

15. Verfahren nach einem der Ansprüche 1 bis 14, wobei es sich bei dem ersten Lösungsmittel um eine sauerstoffhaltige organische Verbindung handelt.

## Revendications

1. Procédé de production de saccharides à partir d'une solution aqueuse, laquelle solution comprend des saccharides et des sous-produits, lequel procédé comprend :
- dans une zone de mélange, le mélange de la solution aqueuse avec un liquide véhicule dans lequel les saccharides sont insolubles et qui possède un point d'ébullition supérieur à celui de l'eau, afin d'obtenir un mélange aqueux ;
- l'élimination de l'eau à partir du mélange aqueux afin d'obtenir une première phase de liquide véhicule comprenant le liquide véhicule, des sous-produits et des saccharides ;
- la séparation des saccharides à partir de la première phase de liquide véhicule afin d'obtenir un liquide véhicule brut, comprenant des sous-produits et un liquide véhicule, et un produit de saccharide ;
où le procédé comprend en outre les étapes consistant à :
- soumettre au moins une portion du liquide véhicule brut à une extraction liquide-liquide par un premier solvant afin d'obtenir une phase de solvant riche en sous-produits et une phase de liquide véhicule pauvre en sous-produits ; et
- recycler au moins une portion de la phase de liquide véhicule pauvre en sous-produits vers la zone de mélange.

2. Procédé selon la revendication 1, dans lequel la solution aqueuse est un hydrolysat de biomasse, préférablement un hydrolysat de bois.

3. Procédé selon la revendication 1 ou 2, dans lequel la solution aqueuse contient un acide choisi dans le groupe constitué par l'acide chlorhydrique, l'acide bromhydrique, l'acide sulfurique, l'acide nitrique, l'acide formique, l'acide acétique et des combinaisons de ceux-ci, la solution aqueuse contenant de préférence de l'acide chlorhydrique.

4. Procédé selon l'une quelconque des revendications 1 à 3, dans lequel la solution aqueuse comprend au moins un élément choisi dans le groupe constitué par le glucose, le fructose, le mannose, le galactose, l'arabinose, le xylose, le saccharose, le cellobiose, les dimères de glucose, les trimères de glucose, le maltose, le cellotriose, le maltotriose, les cellodextrines, les dextrines, les oligosaccharides-xylanes, les oligosaccharides-mannanes, les oligosaccharides-arabinanes, les oligofructanes, l'amidon, la cellulose et des combinaisons de ceux-ci.

5. Procédé selon l'une quelconque des revendications 1 à 4, dans lequel la solution aqueuse comprend de 5 à 35% en poids de saccharides, de 0,1 à 10% en poids de sous-produits et de 5 à 45% en poids d'acide, tous les pourcentages étant basés sur la solution aqueuse.

6. Procédé selon l'une quelconque des revendications 1 à 5, dans lequel le liquide véhicule est immiscible avec l'eau.

7. Procédé selon l'une quelconque des revendications 1 à 6, dans lequel le liquide véhicule possède un point d'ébullition d'au moins 175°C.

8. Procédé selon l'une quelconque des revendications 1 à 7, dans lequel le liquide véhicule est une huile hydrocarbonée comprenant des hydrocarbones ayant de 8 à 50 atomes de carbone.

9. Procédé selon l'une quelconque des revendications 1 à 8, dans lequel l'eau et l'acide sont éliminés à partir du mélange aqueux par évaporation dans une étape d'évaporation.

10. Procédé selon la revendication 9, dans lequel l'étape d'évaporation est effectuée à une température dans la plage allant de 50 à 120°C.

11. Procédé selon l'une quelconque des revendications 9 à 10, dans lequel l'étape d'évaporation est effectuée à une pression inférieure à 400 mbars, préférablement allant de 50 à 300 mbars.

12. Procédé selon l'une quelconque des revendications 1 à 11, dans lequel les saccharides sont séparés à partir de la première phase de liquide véhicule comprenant du liquide véhicule, des sous-produits et des saccharides, par sédimentation, centrifugation, filtration, séparation par hydrocyclone et des combinaisons de celles-ci.

13. Procédé selon l'une quelconque des revendications 1 à 11, dans lequel la première phase de liquide véhicule comprenant du liquide véhicule, des sous-produits et des saccharides, est mélangée avec un deuxième solvant qui est immiscible avec le liquide véhicule et dans lequel les saccharides sont solubles, afin de conduire à deux phases liquides, et où les deux phases liquides sont séparées afin de conduire à une deuxième solution comprenant des saccharides solubilisés dans le deuxième solvant comme l'une des phases, et le liquide véhicule brut comme la deuxième phase.

14. Procédé selon la revendication 13, dans lequel le liquide véhicule est immiscible avec l'eau et le deuxième solvant est constitué d'eau.

15. Procédé selon l'une quelconque des revendications 1 à 14, dans lequel le premier solvant est un composé organique contenant de l'oxygène.
